# EUROPEAN PATENT SPECIFICATION

(11) **EP 2 779 406 B1**
(45) Date of publication and mention of the grant of the patent: **23.02.2022**
(21) Application number: 14159054.7
(22) Date of filing: 12.03.2014
(51) Int. Cl.: F24F 11/00

(54) **Power converter and air conditioner having the same**
Stromwandler und Klimaanlage damit
Convertisseur de puissance et climatiseur comportant celui-ci

(30) Priority: 13.03.2013 KR 20130026865; 13.03.2013 KR 20130026866
(43) Date of publication of application: 17.09.2014
(73) Proprietor: LG Electronics, Inc., Seoul 150-721 (KR)
(72) Inventor: Jeon, Jonghyun, 153-802 Seoul (KR); Park, Taeyoung, 153-802 Seoul (KR); Moon, Jungsong, 153-802 Seoul (KR); Kim, Sangyoung, 153-802 Seoul (KR); An, Joonsik, 153-802 Seoul (KR)
(74) Representative: Vossius & Partner Patentanwälte Rechtsanwälte mbB

(56) References cited:
- EP-A2- 0 837 548
- JP-A- 2007 195 282
- KR-A- 20100 003 580
- KR-A- 20100 102 965
- US-A1- 2010 226 149

## Description

### BACKGROUND OF THE INVENTION

### Field of the invention

The present invention relates to a power converter and an air conditioner having the same. More specifically, the present invention relates to a power converter which is operable at different loads efficiently, and an air conditioner having the same.

### Description of the Related Art

The air conditioner is machine installed in a space, such as a room, a living room, an office or a store for controlling a temperature, humidity, cleanness, and an air flow of the space for maintaining a comfortable room environment.

In general, in the air conditioners, there are unit type air conditioners and split type air conditioners. Though functionally the same, the unit type air conditioner has a cooling function and a heat dissipation function integrated therein to install in a recess in a wall or in a window of a house, and the split type air conditioner has an indoor unit installed in a room for cooling or heating the room, and an outdoor unit installed outdoors for heat dissipation and compression, wherein the indoor unit and the outdoor unit are connected with refrigerant pipelines.

In the meantime, as requirements for high performance and high efficiency air conditioners become the higher, there have been different efforts attempted.

KR 2010 0102965 A and KR 2010 0003580 A relate to a power converter with controller and inverter for air conditioning systems.

US 2010/226149 A1 relates to a power supply converter with first switch and second switch controlled in an interleaved manner according to the value of the load being below or above a certain level.

EP 0 837 548 A2 relates to an interleaved switching converter.

### SUMMARY OF THE INVENTION

Accordingly, the present invention has been made in an effort to solve the aforementioned problems, and it is an object of the present invention to provide a power converter which is operable at different loads efficiently, and an air conditioner having the same.

The above objects of the present invention are achieved by the features defined in the claims.

To achieve the objects of the present invention, a power converter as claimed in independent claim 1 is disclosed.

### BRIEF DESCRIPTION OF THE DRAWINGS

FIG. 1 is a perspective view illustrating a configuration of an air conditioner in accordance with a preferred embodiment of the present invention;
FIG. 2 is a schematic view illustrating the air conditioner in FIG. 1;
FIG. 3 is a block diagram illustrating the power converter in the outdoor unit in FIG. 1;
FIG. 4 is an exemplary circuit diagram illustrating the converter in the power converter in FIG. 3;
FIG. 5 is a block diagram illustrating an example of the converter controller in FIG. 4, not covered by the invention;
FIG. 6A is a graph illustrating load regions of a power converter, not covered by the invention;
FIG. 6B is a graph illustrating power vs. power factor of respective regions in FIG. 6A;
FIGS. 7A and 7B are circuit diagrams illustrating operation of the power converter in FIG. 4, respectively;
FIGS. 8A and 8B are reference circuit diagrams for describing operation of the first converter in FIG. 4;
FIG. 9 illustrates an inverter circuit in the power converter in FIG. 3;
FIG. 10 is a block diagram illustrating the inverter controller in FIG. 9;
FIG. 11 is another exemplary circuit diagram
   illustrating the converter in the power converter in FIG. 3, according to the invention;
FIGS. 12A and 12B are block diagrams illustrating the converter controllers in FIG. 11, respectively;
FIG. 13 is a graph illustrating load regions of a power converter according to the invention;
FIGS. 14A to 14C are circuit diagrams illustrating operation of the power converter in FIG. 11, respectively; and
FIGS. 15A and 15B are reference circuit diagrams for describing operation of the first converter in FIG. 11.

### DETAILED DESCRIPTION OF THE INVENTION

In what follows, a power converter and an air conditioner having the same according to preferred embodiments of the present invention will be described in detail with reference to the appended drawings.

Since suffixes "module" and "unit" to names of elements used in following description are given taking easy write up of the specification into account simply, no important meaning or role is given thereto. Therefore, the "module" and "unit" may be used mixed with each other.

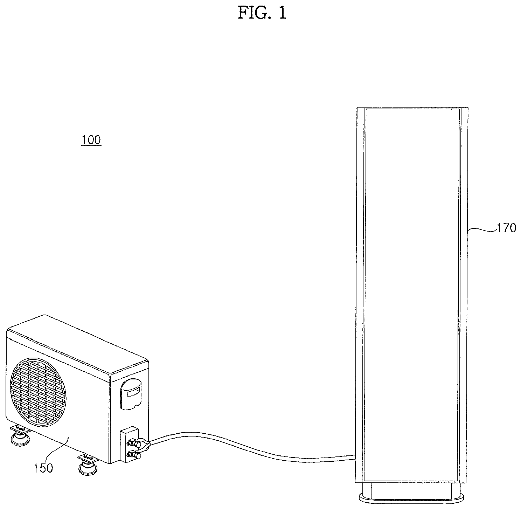

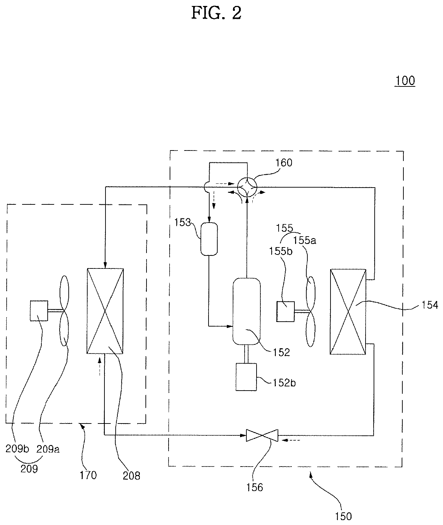

FIG. 1 is a perspective view illustrating a configuration of an air conditioner in accordance with a preferred embodiment of the present invention, and FIG. 2 is a schematic view illustrating the air conditioner in FIG. 1.

Referring to FIG. 2 , the air conditioner 100 includes an outdoor unit 150 and an indoor unit 170.

The outdoor unit 150 is operated in a cooling mode or a heating mode for supplying refrigerant to the indoor unit 170 in response to demand from the indoor unit 170 connected thereto or an external control order.

For this, the outdoor unit 150 includes a compressor 152 for compressing the refrigerant, a compressor motor 152b for driving the compressor, an outdoor heat exchanger 154 for dissipating heat from compressed refrigerant, an outdoor fan unit 155 having an outdoor fan 155a arranged to one side of the outdoor heat exchanger 154 for accelerating the heat dissipation from the refrigerant and a motor 5b for rotating the outdoor fan 155a, an expansion device 156 for expanding condensed refrigerant, a cooling/heating change-over valve 160 for changing a flow path of the compressed refrigerant, and an accumulator 153 for temporary storage of gas refrigerant for supplying refrigerant at a fixed pressure to the compressor after removal of water and foreign matter from the refrigerant. The compressor 152 may be one of an inverter compressor, and a constant speed compressor.

Moreover, the outdoor unit 150 may further include at least one pressure sensor (Not shown) for measuring a pressure of the refrigerant, and at least one temperature sensor (Not shown) for measuring a temperature.

The indoor unit 170 includes an indoor heat exchanger 208 arranged to a room for cooling or heating a room, and an indoor fan unit 209 having an indoor fan 209a arranged to one side of the indoor heat exchanger 208 for accelerating heat dissipation from the refrigerant, and a motor 209b for rotating the indoor fan 209a. There may be at least one indoor heat exchanger 208 installed in the room.

Moreover, the indoor unit 170 may further include an outlet (Not shown) for discharging heat exchanged air, and a wind direction controller (Not shown) for controlling opening/closing of the outlet (Not shown) and a direction of the air being discharged. For an example, a vane may be mounted for opening/closing at least one of an air inlet (Not shown) and the air outlet (Not shown) as well as guiding the air. The vane may, not only open/close the air inlet and the air outlet, but also guide a direction of the air being drawn in or discharged.

In the meantime, the indoor unit 170 may control an air flow rate being drawn in or discharged by controlling a rotation speed of the indoor fan 209a.

And, the indoor unit 170 may further include a display unit (Not shown) for displaying an operation state and information set to the indoor unit 170, and an input unit (Not shown) for inputting data to be set. Also, the indoor unit 170 may further include an indoor temperature sensing unit (Not shown) for sensing a room temperature, and a human body sensing unit (Not shown) for sensing a human body present to a room space.

In the meantime, the air conditioner 100 may be configured as a room cooler for cooling the room, or as a heat pump for cooling or heating the room.

In the meantime, though the specification describes the indoor unit 170 taking a stand type as an example, a ceiling type or a wall mounting type may also viable, or a variety of modes, such as a unit type which has no individual outdoor unit or an indoor unit, may also viable.

In the meantime, refrigerant pipelines are connected between the indoor unit 170 and the outdoor unit 150, for discharging refrigerated/heated air to the room from the indoor unit 170 depending on circulation of the refrigerant. In this case, the one outdoor unit 150 may be connected to a plurality of the indoor units 170, or at least one indoor unit may be connected to each of a plurality of the outdoor units.

The indoor unit 170 and the outdoor unit 150 may have communication lines connected therebetween for transmission/reception of a control order according to a predetermined communication system.

In the meantime, the compressor 152 may be driven by drive power supplied thereto through a power converter 200. In detail, the drive power may be supplied to the motor in the compressor 152 from the power converter 200.

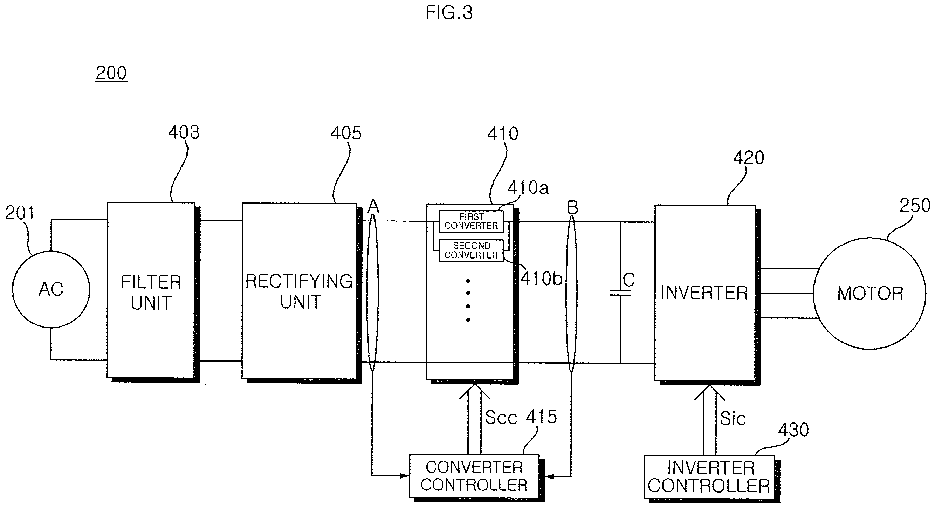

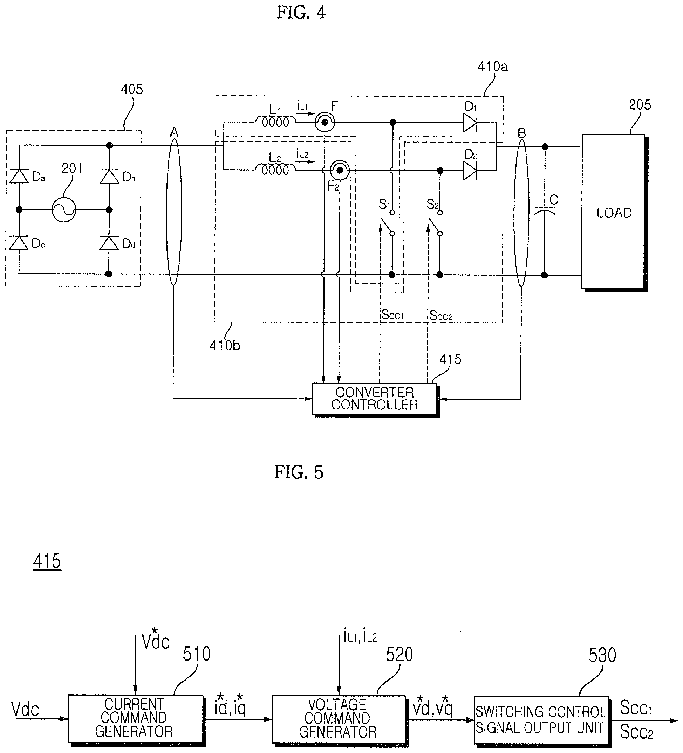

FIG. 3 is a block diagram illustrating the power converter in the outdoor unit in FIG. 1, and FIG. 4 is a circuit diagram illustrating the converter in the power converter in FIG. 3.

The power converter 200 in accordance with the block diagram of FIG. 3 may include a filter unit 403, a rectifying unit 405, a converter 410, a converter controller 415, a capacitor C, an inverter 420, and an inverter controller 430.

The filter unit 403 may be arranged between an input AC power source 201 and the rectifying unit 405, for filtering out a harmonic current from the input AC power source 201 or the power converter 200. For this, the filter unit 403 may have an inductor which is an inductive device, and a capacitor which is a capacitive device. For an example, the filter unit 403 may have an LCL filter with the inductor, the capacitor and the inductor.

The rectifying unit 405 receives the input AC power 201 from the filter unit 403 and rectifies the same. Though FIG. 4 illustrates the rectifying unit 405 for single phase AC power, having four diodes Da, Db, Dc, and Db used in a bridge mode, a variety of embodiments are viable.

The converter 410 converts the power rectified at the rectifying unit 405 to DC power and outputs the same. Particularly, the converter 410 outputs the DC power to a capacitor C arranged at output terminals of the converter 410.

The embodiment of the present invention suggests using an interleave converter (Cascade converter) having a plurality of converters 410a, 410b, ---- as the converter 410. Though an interleave boost converter, an interleave buck boost converter, an interleave buck converter and so on are viable as the interleave converter, the specification will be described focused on the interleave boost converter.

The plurality of boost converters 410a, 410b, ---- in the interleave boost converter 410 are connected in parallel, for performing interleaved operation. As the plurality of boost converters connected in parallel to one another perform interleaved voltage control, voltage control by current distribution is possible. According to this, an endurance of a circuit device in the interleave boost converter 410 can be improved, and ripple of an input current can be reduced.

For an example, if a first boost converter 410a and a second boost converter 410b connected in parallel to each other in the interleave boost converter 410 perform interleaved operation, since a first switching element S1 in the first boost converter 410a and a second switching element S2 in the second boost converter 410b are turned on/off with a 180degree phase difference from each other electrically, a switching loss takes place, consequently. The switching loss taken place thus performs efficiency at a low load region lower than efficiency at a high load region.

In order to improve the problem, an embodiment not covered by the present invention suggests changing a number of operating interleaved converters according to a load level of both terminals of the capacitor which are output terminals of the interleaved converters for increasing operation efficiency of entire region.

Especially, the interleave converter 410 is controlled such that the first boost converter 410a is operated at the low load region, and the first boost converter 410a and the second boost converter 410b are operated at the high load region. The interleave convertor 410 of such a configuration is illustrated in FIG. 4.

In the meantime, as the switching element used in the interleave boost converter, an MOSFET (metal oxide semiconductor field effect transistor), an IGBT (insulated gate bipolar mode transistor), and so on may be used.

In the meantime, though all of the boost converters 410a, 410b, ---- in the interleave converter 410 may be embodied of, but not limited to, the same type switching elements, for an example, the MOSFET or IGBT, other types of switching elements may also used. In detail, the MOSFET device may be used for the first boost converter 410a, and the IGBT device may be used for the second boost converter 410b. Particularly, if the MOSFET device is used for the first boost converter which is operated at the low load region, fast switching is possible enabling to improve operation efficiency, and if the IGBT device is used for the second boost converter 410b which is operated at the high load region, the interleave converter 410 may perform stable operation.

Of the plurality of boost converters 410, FIG. 4 illustrates the first boost converter 410a and the second boost converter 410b. The boost converter 410 will be described focused on the first boost converter 410a and the second boost converter 410b.

The first boost converter 410a may include a first diode D1 having one terminal connected to the capacitor C, a first inductor L1 connected between the first diode D1 and the rectifying unit 405, and a first boost switching element S1 connected to the first inductor L1 and the first diode D1 in parallel.

In the meantime, the second boost converter 410b may include a second diode D2 having one terminal connected to the capacitor C, a second inductor L2 connected between the second diode D2 and the rectifying unit 405, and a second boost switching element S2 connected to the second inductor L2 and the second diode D2 in parallel.

If the first boost converter 410a and the second boost converter 410b connected to each other in parallel to perform interleaved operation, performing the first switching element S1 in the first boost converter 410a and the second switching element S2 in the second boost converter 410b to be turned on/off with a 180degree phase difference electrically, a switching loss takes place, accordingly. The switching loss taken place in this time performs efficiency at the low load region lower than efficiency at the high load region.

In order to improve such a problem, an embodiment not covered by the present invention suggests changing a number of operating converters in the interleave converter according to a load level on the both terminals of the capacitor which are output terminals of the interleave converter 410, thereby improving operation efficiency for entire load regions.

Especially, the interleave converter 410 is controlled such that the first boost converter 410a is operated in the low load region, and the first boost converter 410a and the second boost converter 410b are operated in the high load region.

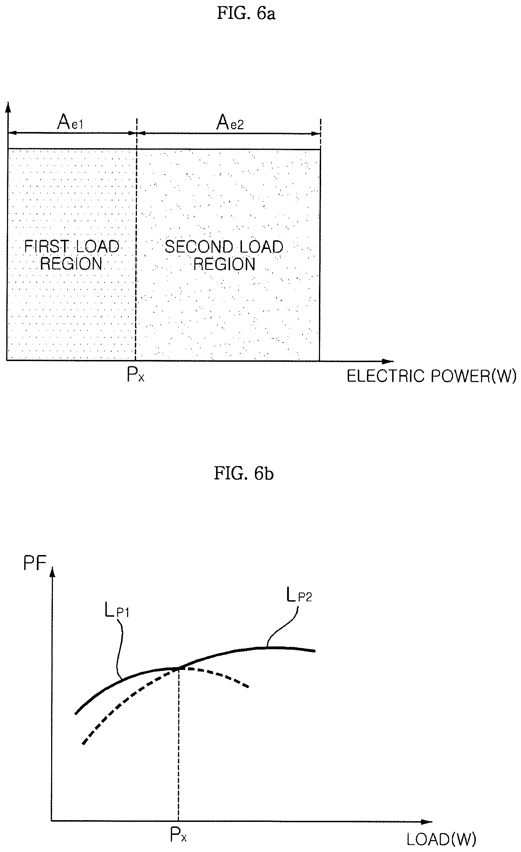

For this, the converter controller 415 divides a load region into the low load region Ae1 (See FIG. 6A) and the high load region Ae2 (See FIG. 6A) according to a load of a voltage at the both terminals of the capacitor C to control the interleave converter 410 such that only the first boost switching element S1 in the first converter 410a is operated in the low load region, and the first boost switching element S1 and the second boost switching element S2 are operated alternately such that the first converter 410a and the second converter 410b perform interleaved operation in the high load region.

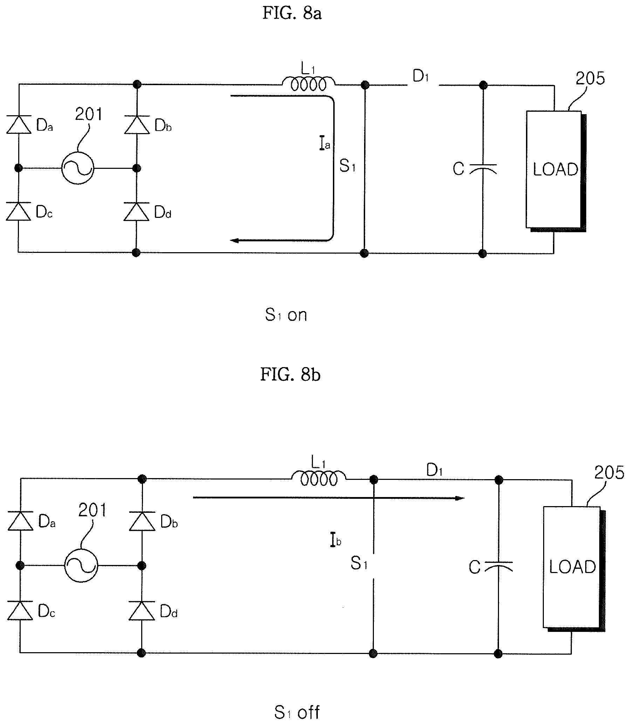

In the meantime, the first converter 410a and the second converter 410b are connected in parallel to each other and operable in boost modes. The boost mode operation will be described in detail later, with reference to FIGS. 8A and 8B.

In the meantime, the first boost switching element S1 in the first boost converter 410a and the second boost switching element S2 in the second boost converter 410b may be identical switching elements, for an example, the MOSFET or the IGBT.

On the other hand, the first boost switching element S1 in the first boost converter 410a and the second boost switching element S2 in the second boost converter 410b may also be switching elements different from each other.

For an example, if only the first boost switching element S1 in the first boost converter 410a is operated in the low load region, the first boost switching element S1 may be the MOSFET for performing high efficiency power conversion, and the second boost switching element S2 which is operated in the high load region may be the IGBT.

And, the power converter 200 may further include an input voltage detector A for detecting an output terminal voltage of the rectifying unit 405, an output voltage detector B for detecting an output terminal voltage of the interleave boost converter 410, i.e., a voltage of a DC terminal capacitor C, and a current detector F1 and F2 for detecting a current flowing to the inductor L1 and L2 in the interleave boost converter 410.

The input voltage detector A may detect an output terminal voltage of the rectifying unit 405. For this, the input voltage detector A may include a resistor device, an amplifier, and so on. An input voltage Vc1 to be detected, being a pulse mode discrete signal, may be inputted to the convertor controller 415.

The output voltage detector B, i.e., the DC terminal voltage detector B may detect an output terminal voltage of the interleave boost converter 410, particularly, an opposite terminal voltage Vdc of the capacitor C.

The capacitor C is arranged between the inverter 420 and the load 205 for storing an output DC power of the interleave converter thereto. Though the drawing illustrates one device as the smoothing capacitor C, a plurality of devices may be provided for securing device stability. In the meantime, since a DC current is stored in the capacitor C, the both terminals of the capacitor C may be named as DC terminals or DC link terminals.

If the load is defined to include the inverter 420 and the motor 205, it may be shown that the load 205 is connected to the both terminals of the capacitor C in the power converter as shown in the drawing. According to this, the DC terminal voltage Vdc may be the same with a load 205 voltage. The output voltage Vdc to be detected, being a pulse mode discrete signal, may be inputted to the converter controller 415.

The first current detector F1 may detect a current i_{L1} flowing to the first inductor L1 in the first boost converter 410a, and the second current detector F2 may detect a current i_{L2} flowing to the second inductor L2 in the second boost converter 410b. For these, CTS (Current Transformers), shunt resistors and the like may be used as the first and second current detectors F1 and F2. The input AC current i_{L1}, and i_{L2} to be detected, being pulse mode discrete signals, may be inputted to the converter controller 415.

In the meantime, the converter controller 415 may include a first converter controller (Not shown) for controlling the first boost converter 410a, and a second converter controller (Not shown) for controlling the second boost converter 410b.

The converter controller 415 may calculate the load on the both terminals of the capacitor based on at least one of the first and second input currents i_{L1} and i_{L2} detected by the first and second current detectors F1 and F2 and the DC terminal voltage Vdc detected by the DC terminal voltage detector B. And, if the calculated load falls under the low load region, the converter controller 415 may control a turn on/turn off timing of the first boost switching element S1 in the first boost converter 410a.

In the meantime, if the calculated load falls under the high load region, the converter controller 415 may control to operate both the first and second boost converters 410a and 410b. That is, the converter controller 415 may control a turn on/turn off timing of the first boost switching element S1 in the first boost converter 410a, and a turn on/turn off timing of the second boost switching element S2 in the second boost converter 410b. In this case, the first boost converter 410a and the second boost converter 410b may perform interleaved operation.

The inverter 420 has a plurality of inverter switching elements for converting the DC current Vdc smoothened by the turn on/turn off operation of the switching element into a three phase power va, vb, and vc of a predetermined frequency and outputting the same to a three phase synchronous motor 250. In this case, the motor 250 may be a motor in the compressor.

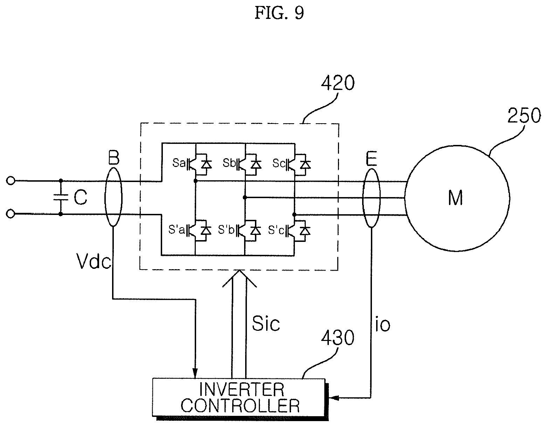

The inverter controller 430 outputs an inverter switching control signal Sic to the inverter 420 for controlling switching operation of the inverter 420. The inverter switching control signal Sic, being a PWM switching control signal, is generated and output based on an output current value i₀ detected by the output current detector (E in FIG. 9).

FIG. 5 is a block diagram illustrating the converter controller 415 in FIG. 4.

Referring to FIG. 5, the converter controller 415 may include a current command generator 510, a voltage command generator 520, and a switching control signal output unit 530.

The current command generator 510 may generate d-, q-axis current command value i*d, i*q with a PI controller or the like based on the DC terminal voltage Vdc detected by the output voltage detector B, i.e., the DC terminal voltage detector B and a DC terminal voltage command value V*dc.

The voltage command generator 520 generates d-, q-axis voltage command value v*_{d}, v*_{q} with the PI controller or the like based on the d-, q-axis current command value i*d, i*q and the first and the detected second input currents i_{L1}, i_{L2} .

The switching control signal output unit 530 outputs a first converter switching control signal Scc1 and a second converter switching control signal Scc2 to the first boost converter 410a and the second boost converter 410b respectively for driving the first boost switching element S1 in the first boost converter 410a and the second boost switching element S2 in the second boost converter 410b based on the d-, q-axis voltage command value v*_{d}, v*_{q}.

At the end, the converter controller 415 calculates the load based on the DC terminal voltage Vdc detected by the DC terminal voltage detector B and the first input current i_{L1} and the second input current i_{L2} detected by the first current detector F1 and the second current detector F2, and outputs the first converter switching control signal Scc1 to the first boost converter 410a for driving the first switching element S1 if the calculated load falls under the low load region.

In the meantime, if the calculated load falls under the high load region, the converter controller 415 outputs the first converter switching control signal Scc1 and the second converter switching control signal Scc2 to the first boost converter 410a and the second boost converter 410b respectively for interleaved driving of the first switching element S1 and the second switching element S2.

FIG. 6A is a graph illustrating load regions of a power converter.

The converter controller 415 may calculate the load on the both terminals of the capacitor based on at least one of the first and second input currents i_{L1} and i_{L2} detected by the first and second current detectors F1 and F2 and the DC terminal voltage Vdc detected by the DC terminal voltage detector B. In this case, the load may be electric power.

The converter controller 415 may determine that the load is a low load if the calculated load is lower than a first electric power level Px, and the load is a high load if the calculated load is higher than the first electric power level Px. Or, the converter controller 415 may determine that the load is a low load if the calculated load is lower than the first electric power level Px, and the load is a high load if the calculated load is higher than a second electric power level which is higher than the first electric power level Px.

According to this, as shown in FIG. 6A, the load 205 may be divided into a low load region Ae1, and a high load region Ae2. In the meantime, in this case, the first electric power level Px may be stored in a memory (Not shown) in the power converter 200.

In the meantime, the first electric power level Px is variable with an operation condition, and the like. For an example, if a highest load used for a predetermined time period is below a predetermined value, the first electric power level Px may be lowered.

FIG. 6B is a graph illustrating power vs. power factor of respective regions in FIG. 6A.

Referring to FIG. 6B, a load lower than the first electric power level Px may fall under the low load region Ae1, and a load higher than the first electric power level Px may fall under the high load region Ae2.

In the meantime, of the interleave boost converter, if only the first boost converter 410a is in operation, load vs. operation efficiency (Power factor) may be illustrated as an LP1 curve, and, of the interleave boost converter, if both of the first and second boost converters 410a and 410b are in operation, the load vs. operation efficiency may be illustrated as an LP2 curve.

Referring to the LP1 curve and the LP2 curve, it may note that, if both of the first and second boost converters 410a and 410b are in operation, the operation efficiency is low due to a switching loss in the low load region, and, if only the first boost converter 410a is in operation, the operation efficiency is low in the high load region.

In order to improve this in the embodiment not covered by the present invention, the interleave boost converter is controlled such that only the first boost converter 410a is operated in the low load region with reference to the first electric power level Px, and both the first and second boost converters 410a and 410b are operated in the high load region with reference to the first electric power level Px.

Eventually, as shown with a thick solid line in FIG. 6B, the operation efficiency of the rectifier 200 can be improved in comparison to the load. Especially, the operation efficiency can be improved for a whole load region.

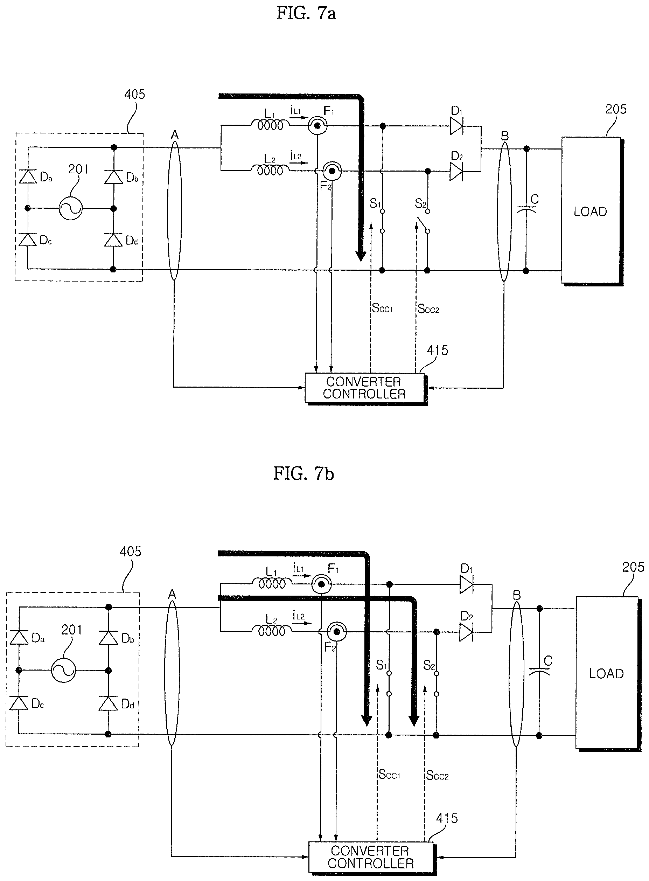

FIGS. 7A and 7B are circuit diagrams illustrating operation of the power converter in FIG. 4, respectively.

FIG. 7A illustrates operation of only the first boost converter 410a in the low load region.

If the calculated load is lower than the first electric power level Px, determining that the load is the low load, the converter controller 415 may control to operate only the first boost converter 410a.

The first boost switching element S1 in the first boost converter 410a is turned on by the first converter switching control signal Scc1 from the converter controller 415. According to this, a current is accumulated at the first inductor for outputting energy accumulated in the first inductor to the capacitor C when the first boost switching element S1 is turned off.

Thus, when the load is low, by performing only the first boost switching element S1 to be in operation and the second boost switching element S2 in the second boost converter 410b not to be in operation, the switching loss can be reduced, and, by performing only the first boost switching element S1 to be in operation, since an output DC voltage can be lowered further, the operation efficiency can be improved.

Next, FIG. 7B illustrates operation of the first boost converter 410a and the second boost converter 410b in the high load region.

Determining that the load is in the high load if the calculated load is higher than the first electric power level Px, the converter controller 415 may control the first boost converter 410a and the second boost converter 410b to perform interleaved operation.

The first boost switching element S1 in the first boost converter 410a is turned on by the first converter switching control signal Scc1 from the converter controller 415. In this case, the second boost switching element S2 in the second boost converter 410b may be turned off.

Then, when the first boost switching element S1 is turned off, the second boost switching element S2 in the second boost converter 410b is turned on by the second converter switching control signal Scc2 from the second converter controller 415b.

Thus, by performing the first boost converter 410a and the second boost converter 410b to perform interleaved operation when the load is high, the input current ripple and noise can be reduced. Moreover, the operation efficiency can be improved even in the high load region.

At the end, by changing a number of the operating converters for respective loads with the interleave converter, effective operation of the power converter can be made possible in a variety of loads. Particularly, the compressor or the like having a large variation of the load can be operated, efficiently.

FIGS. 8A and 8B are reference circuit diagrams for describing operation of the first converter in FIG. 4.

FIGS. 8A and 8B illustrate the first boost converter 410a operated in a boost mode.

FIG. 8A illustrates a current Ia flowing to a closed loop constructed of the first inductor L1 and the first boost switching element S1 if the first boost switching element S1 in the first boost converter 410a is turned on. According to this, energy is accumulated at the first inductor L1 based on the current Ia. In this case, the first diode D1 is not conductive.

FIG. 8B illustrates the first diode D1 become conductive if the first boost switching element S1 in the first boost converter 410a is turned off to perform a current Ib to flow through the first inductor L1 and the first diode D1. The current Ib may be a sum of the energy accumulated at the first inductor L1 in FIG. 8A and the current based on the input AC power source 201.

That is, the first boost switching element S1 in the first boost converter 410a is turned on/off, i.e., pulse width modulated.

Since operation of the second converter is identical to the operation illustrated in FIGS. 8A and 8B, detailed description will be omitted.

FIG. 9 illustrates an inverter circuit in the power converter in FIG. 3.

The inverter 420 has upper switching elements Sa, Sb, Sc connected in series and lower switching elements S'a, S'b, S'c connected in series, which construe one pair, to have total three pairs of upper and lower switching elements Sa&S'a, Sb&S'b, Sc&S'c connected in parallel to each other. Each of the switching elements Sa, S'a, Sb, S'b, Sc. S'c has a diode connected thereto in an antiparallel.

The switching elements in the inverter 420 are turned on/off in response to a switching control signal Sic from the controller 430.

In a motor 250 drive mode, the inverter 420 converts the DC current to the both terminals of the capacitor C into an AC current for driving the motor 250.

The inverter controller 430 may control operation of the switching element in the inverter 420. For this, the inverter controller 430 may receive the output current i₀ from the output current detector (E in FIG. 9).

The inverter controller 430 outputs the inverter switching control signal Sic to the inverter 420 for controlling switching operation of the inverter 420. The inverter switching control signal Sic, being a PWM switching control signal, is generated and output based on the output current value i₀ from the output current detector (E in FIG. 9).

The output current detector (E in FIG. 9) may detect the output current i₀ flowing between the inverter 420 and the three phase motor 250, i.e., a current flowing to the motor 250. The output current detector E may detect entire output currents ia, ib, ic of respective phases, or the output currents of two phases by using three phase equilibrium.

The output current detector E may be positioned between the inverter 420 and the motor 250, and a CT (Current Transformer) or a shunt resistor may be used for detection of the current.

If the shunt resistor is used, three shunt resistors may be positioned between the inverter 420 and the synchronous motor 250, or may have one terminals connected to the three lower arm switching elements S'a, S'b, S'c, respectively. In the meantime, use of two shunt resistors by using the three phase equilibrium is also viable. In the meantime, if one shunt resistor is used, it is viable that the shunt resistor is arranged between the capacitor C and the inverter 420.

The detected output current iₒ, being a pulse mode discrete signal, may be applied to the controller 430, and the inverter switching control signal Sic is generated based on the detected output current iₒ. Description hereinafter will be made assuming that the detected output current iₒ is the three phase output currents ia, ib. ic.

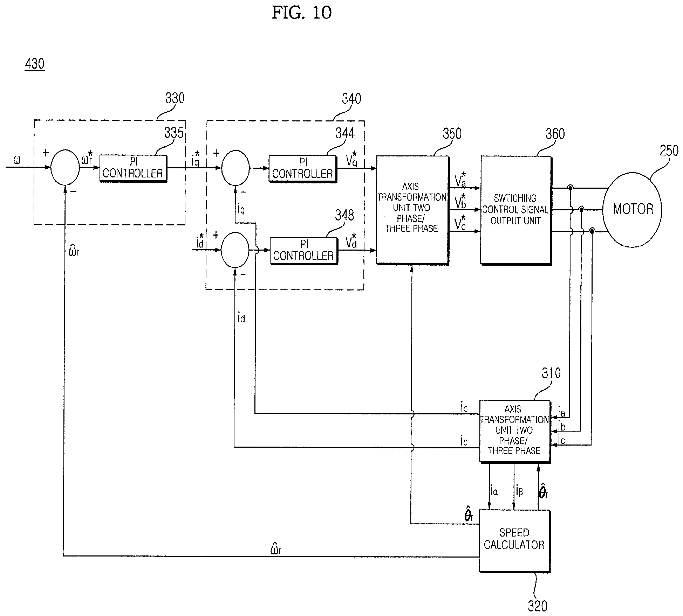

FIG. 10 is a block diagram illustrating the inverter controller in FIG. 9.

Referring to FIG. 10, the inverter controller 430 may include a axis transformation unit 310, a speed calculator 320, a current command generator 330, a voltage command generator 340, a axis transformation unit 350, and a switching control signal output unit 360.

The axis transformation unit 310 receives the three phase output current ia, ib, ic from the output current detector E and converts the three phase output currents ia, ib, ic into two phase currents i**α**, i**β** on a rest frame.

In the meantime, the axis transformation unit 310 may convert the two phase currents i**α**, i**β** on the rest frame into two phase currents id, iq on a rotary coordinate system.

The speed calculator 320 may calculate speed .ω̂*ᵣ* based on a position signal H of a rotor received from a position sensing unit 235. That is, the speed may be obtained by dividing the position signal with a time period.

In the meantime, the position sensing unit 235 may sense a position of the rotor of the motor 250. For this, the position sensing unit 235 may include a hole sensor.

In the meantime, the speed calculator 320 may output a calculated position *θ̂ᵣ* and a calculated speed *ω̂ᵣ* based on the position signal H of the rotor applied thereto.

In the meantime, the current command generator 330 calculates a speed command value ω*ᵣ based on the calculated speed ω̂*ᵣ* and a target speed **ω**, and generates a current command value i*_{q} based on the speed command value ω*ᵣ. For an example, the current command generator 330 performs PI control at a PI controller 535 based on the speed command value ω*ᵣ which is a difference between the calculated speed ω̂*ᵣ* and a target speed **ω** to generate the current command value i*_{q}. Though the drawing illustrates a q-axis current command value i*q as the current command value, different from the drawing, a d-axis current command value i*_{d} may also be generated, altogether. In the meantime, a value of the d-axis current command value i*_{d} may be set to be zero.

In the meantime, the current command generator 330 may further include a limiter (Not shown) for limiting a level of the current command value i*_{q} so that the current command value i*_{q} does not exceed an allowable range.

Next, the voltage command generator 340 generates d-axis, q-axis voltage command values v*_{d}, v*_{q} based on the d-axis, q-axis currents i_{d}, i_{q} pivoted to the two phase rotary coordinate system at the axis transformation unit and the current command values i*_{d}, i*_{q} from the current command generator 330 and the like. For an example, the voltage command generator 340 may perform PI control at the PI controller 544 and may generate a q-axis voltage command value v*_{q} based on a difference between the q-axis current i_{q}, and the q-axis current command value i*_{q}. And, the voltage command generator 340 may perform PI control at the PI controller 548, and may generate the d-axis voltage command value v*_{d} based on a difference between the d-axis current i_{d} and the d-axis current command value i*_{d}. In the meantime, a value of the d-axis voltage command value v*_{d} may be set to zero matched to a case in which the d-axis current command value i*_{d} is set to zero.

In the meantime, the voltage command generator 340 may further include a limiter (Not shown) for limiting a level of the d-, q-axes voltage command values v*_{d}, v*_{q} so that the d-, q-axes voltage command values v*_{d}, v*_{q} do not exceed allowable ranges, respectively.

In the meantime, the generated d-, q-axes voltage command values v*_{d}, v*_{q} are output to the axis transformation unit 350.

The axis transformation unit 350 receives the position *θ̂ᵣ* from the speed calculator 320 and the d-, q-axes voltage command values v*_{d}, v*_{q} and performs pivoting.

At first, the axis transformation unit 350 performs pivoting from the two phase rotary coordinate system to the two phase rest frame. In this case, the position *θ̂ᵣ* calculated at the speed calculator 320 may be used.

Then, the axis transformation unit 350 may perform pivoting from the two phase rest frame to a three phase rest frame. With such pivoting, the axis transformation unit 350 outputs three phase output voltage command values v*a, v*b, v*c.

The switching control signal output unit 360 generates and outputs a PWM inverter switching control signal Sic based on the three phase output voltage command values v*a, v*b, v*c.

The inverter switching control signal Sic may be converted into a gate drive signal at a gate drive unit (Not shown) and applied to gates of respective switching elements in the inverter 420. According to this, the switching elements Sa, S'a, Sb, S'b, Sc, S'c in the inverter 420 perform switching operation.

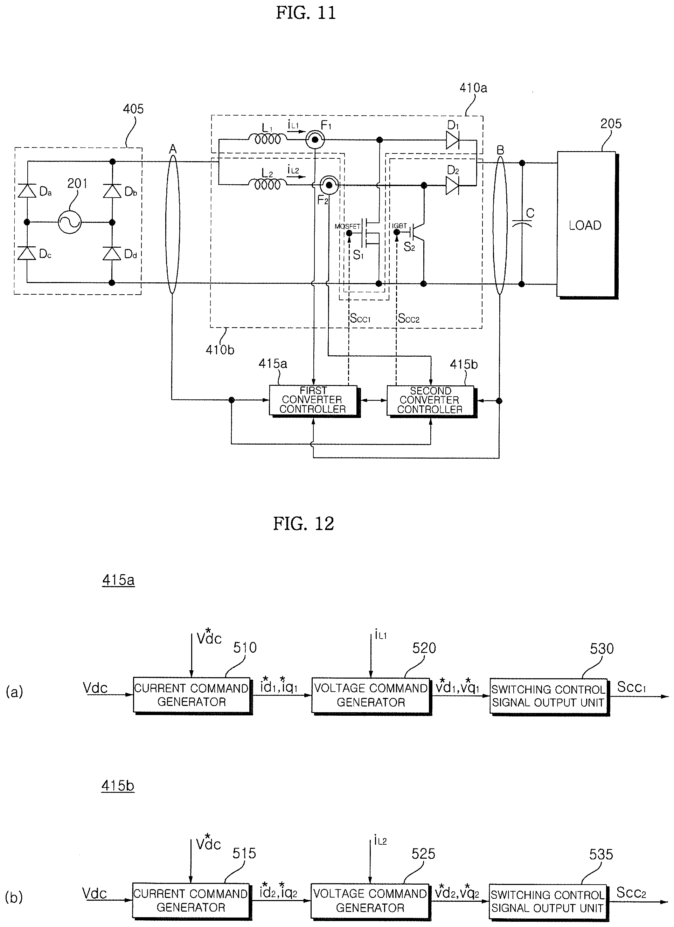

In the meantime, another preferred embodiment of the present invention suggests using the MOSFET as the switching element in the first boost converter and the IGBT as the switching element in the second boost converter for performing high efficiency power conversion at the low load region and performing stable operation possible at the high load region. An interleave converter of such a configuration is illustrated in FIG. 11.

FIG. 11 is another exemplary circuit diagram illustrating the converter in the power converter in FIG.3 according to the present invention.

Of the plurality of boost converters 410, FIG. 11 illustrates the first boost converter 410a and the second boost converter 410b. Hereinafter, the boost converter will be described taking the first boost converter 410a and the second boost converter 410b as an example.

The first boost converter 410a includes a first diode D1 having one terminal connected to the capacitor C, a first inductor L1 connected between the first diode D1 and the rectifying unit 405, and a first boost switching element S1 connected to the first inductor L1 and the first diode D1 in parallel. In this case, the first boost switching element S1 may be an MOSFET switching element.

In the meantime, the second boost converter 410b includes a second diode D2 having one terminal connected to the capacitor C, a second inductor L2 connected between the second diode D2 and the rectifying unit 405, and a second boost switching element S2 connected to the second inductor L2 and the second diode D2 in parallel. In this case, the second boost switching element S2 may be an IGBT switching element.

Though the MOSFET switching element has advantages of fast operation speed and good power rectifying efficiency, the MOSFET switching element has a drawback of limitation of use at the high load region due to a rated voltage lower than the IGBT switching element.

In the meantime, though the IGBT switching element has a high rated voltage enabling to perform stable operation at a load region higher than the MOSFET switching element, the IGBT switching element has a drawback in that power rectifying efficiency is poor due to an operation speed lower than the MOSFET switching element.

If the power converter is used in the compressor of the air conditioner which has large variation of the load, and if any one of the switching elements is used selectively, it may be difficult to perform operation which satisfies both the low load region and the high load region.

In order to improve such a point, the present invention suggests using both the MOSFET switching element and the IGBT switching element. For this, the interleave converter is used for operating respective switching elements depending on the load.

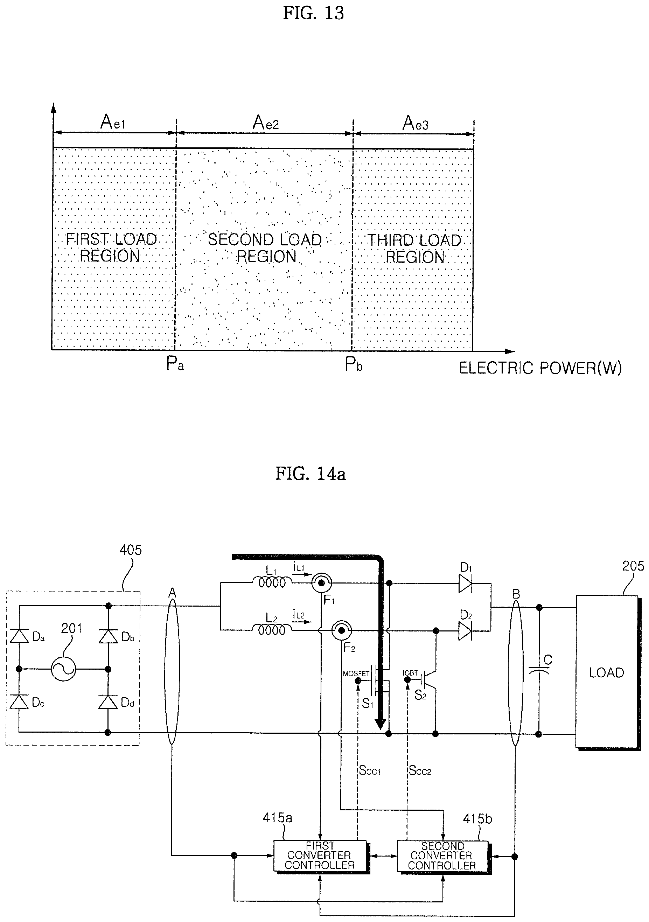

For this, the converter controller 415 divides the load of the voltage at both terminals of the capacitor C into a low load region Ae1 (See FIG. 13), a high load region Ae3 (See FIG. 13), and an intermediate load region Ae2 (See FIG. 13), and, according to the load regions, controls to operate only the MOSFET switching element S1 in the first boost converter 410a at the low load region, controls to operate only the IGBT switching element S2 in the second boost converter 410b at the high load region, and controls the MOSFET switching element S1 and the IGBT switching element S2 alternately such that the first boost converter 410a and the second boost converter 410b perform interleaved operation at the intermediate region.

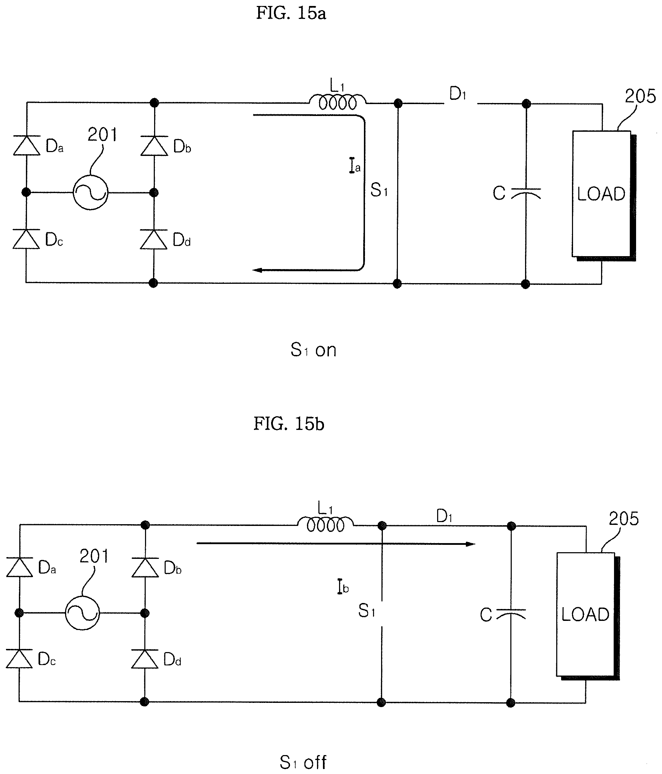

In the meantime, the first boost converter 410a and the second boost converter 410b are connected to each other in parallel, and operable in a boost mode. The boost mode operation will be described later with reference to FIGS. 15A and 15B.

And, the power converter 200 may further include an input voltage detector A for detecting an output terminal voltage of the rectifying unit 405, and includes an output voltage detector B for detecting an output terminal voltage of the interleave boost converter 410, i.e., a voltage of a DC terminal capacitor C, and a current detector F1 and F2 for detecting a current flowing to the inductor L1 and L2 in the interleave boost converter 410.

The input voltage detector A may detect an output terminal voltage of the rectifying unit 405. For this, the input voltage detector A may include a resistor device, an amplifier, and so on. An input voltage Vc1 to be detected, being a pulse mode discrete signal, may be inputted to the convertor controller 415.

The output voltage detector B, i.e., the DC terminal voltage detector B detects an output terminal voltage of the interleave boost converter 410, particularly, an opposite terminal voltage Vdc of the capacitor C.

The capacitor C is arranged between the inverter 420 and the load 205 for storing an output DC power of the interleave converter thereto. Though the drawing illustrates one device as the smoothing capacitor C, a plurality of devices may be provided for securing device stability. In the meantime, since a DC current is stored in the capacitor C, the both terminals of the capacitor C are named as DC terminals or DC link terminals.

If the load is named to include the inverter 420 and the motor 205, it may be shown that the load 205 is connected to the both terminals of the capacitor C in the power converter as shown in the drawing. According to this, the DC terminal voltage Vdc may be the same with a load 205 voltage. The output voltage Vdc to be detected, being a pulse mode discrete signal, may be inputted to the converter controller 415.

The first current detector F1 may detect a current i_{L1} flowing to the first inductor L1 in the first boost converter 410a, and the second current detector F2 may detect a current i_{L2} flowing to the second inductor L2 in the second boost converter 410b. For this, CTS (Current Transformers), shunt resistors and the like may be used as the first and second current detectors F1 and F2. The input AC currents i_{L1}, and i_{L2} to be detected, being pulse mode discrete signals, may be inputted to the converter controller 415.

In the meantime, the converter controller 415 has a first converter controller 415a for controlling the first boost converter 410a, and a second converter controller 415b for controlling the second boost converter 410b.

The first converter controller 415a calculates the load based on the DC terminal voltage Vdc sensed at the output voltage detector B, and the first inductor current I_{L1} detected at the first current detector F1. The first converter controller 415a controls a turn on/turn off timing of the MOSFET switching element S1 in the first boost converter 410a if the calculated load falls under the low load region.

In the meantime, if the calculated load falls under the high load region, the first converter controller 415a outputs the calculated load to the second converter controller 415b. According to this, the second converter controller 415b controls a turn on/turn off timing of the IGBT switching element S2 in the second boost converter 410b.

In the meantime, if the calculated load falls under the intermediate load, the first converter controller 415a controls a turn on/turn off timing of the MOSFET switching element S1 in the first boost converter 410a, and outputs the calculated load to the second converter controller 415b. According to this, the second converter controller 415b controls a turn on/turn off timing of the IGBT switching element S2 in the second boost converter 410b.

In the meantime, different from the foregoing description, the second converter controller 415b may also calculate the load based on the DC terminal voltage Vdc sensed at the output voltage detector B and the second inductor current I_{L2} detected at the second current detector F2. And, if the calculated load falls under the high load region, the second converter controller 415 may control the turn on/turn off timing of the IGBT switching element S2 in the second boost converter 410b.

The inverter 420 has a plurality of inverter switching elements for converting the DC current Vdc smoothened by the turn on/turn off operation of the switching element into a three phase power va, vb, and vc of a predetermined frequency and outputting the same to a three phase synchronous motor 250. In this case, the motor 250 may be a motor in the compressor.

The inverter controller 430 outputs an inverter switching control signal Sic to the inverter 420 for controlling switching operation of the inverter 420. The inverter switching control signal Sic, being a PWM switching control signal, is generated and output based on an output current value iₒ detected by the output current detector (E in FIG. 9).

FIGS. 12A and 12B are block diagrams illustrating the converter controllers in FIG. 11, respectively.

FIG. 12A illustrates a block diagram of the first converter controller 415a in FIG. 11. The first converter controller 415a may include a current command generator 330, a voltage command generator 320, and a switching control signal output unit 330.

The current command generator 330 may generate a d-, q-axis current command value i*_{d1}, i*_{q1} with the PI controller or the like based on the DC terminal voltage Vdc detected by the output voltage detector B, i.e., the DC terminal voltage detector B and the DC terminal voltage command value V*dc.

The voltage command generator 320 generates d-, q-axis voltage command value v*_{d1}, v*_{q1} with the PI controller or the like based on the d-, q-axis current command value i*_{d1}, i*_{q1} and the detected first input current i_{L1}.

The switching control signal output unit 330 outputs a first converter switching control signal Scc1 to the first boost converter 410a for driving the MOSFET switching element S1 in the first boost converter 410a based on the d-, q- axis voltage command value v*_{d1}, v*_{q1}.

At the end, the first converter controller 415a outputs the first converter switching control signal Scc1 to the first boost converter 410a for driving the first switching element S1 if the calculated load falls under the low load region based on the DC terminal voltage Vdc detected by the DC terminal voltage detector B, and the first input current i_{L1} detected by the first current detector F1.

Next, FIG. 12B illustrates a block diagram of the second converter controller 415b in FIG. 11. The second converter controller 415b may include a current command generator 315, a voltage command generator 325, and a switching control signal output unit 335.

The current command generator 315 may generate a d-, q-axis current command value i*_{d2}, i*_{q2} with the PI controller or the like based on the DC terminal voltage Vdc detected by the output voltage detector B, i.e., the DC terminal voltage detector B and the DC terminal voltage command value V*dc.

The voltage command generator 325 generates a d-, q-axis voltage command value v*_{d2}, v*_{q2} with the PI controller or the like based on the d-, q-axis current command value i*_{d2}, i*_{q2} and the detected second input current i_{L2}.

The switching control signal output unit 335 outputs a second converter switching control signal Scc2 to the second boost converter 410b for driving the IGBT switching element S2 in the second boost converter 410b based on the d-, q- axis voltage command value v*_{d2}, v*_{q2}.

At the end, if the calculated load falls under the high load region, the second converter controller 415b outputs the second converter switching control signal Scc2 to the second boost converter 410b for driving the IGBT switching element S21 based on the DC terminal voltage Vdc detected by the DC terminal voltage detector B, and the second input current i_{L2} detected by the second current detector F2.

FIG. 13 is a graph illustrating load regions of a power converter according to the present invention.

The first converter controller 415a or the second converter controller 415b calculates the load on the both terminals of the capacitor based on the DC terminal voltage Vdc detected by the DC terminal voltage detector B and the first and second input currents i_{L1} and i_{L2} detected by the first and second current detectors F1 and F2. In this case, the load may be electric power.

The first converter controller 415a or the second converter controller 415b determines that the load is a low load if the calculated load is lower than a first electric power level Pa, a high load if the calculated load is higher than a second electric power level Pb, and an intermediate load if the calculated load falls between the first electric power level Pa and the second electric power level Pb.

According to this, the load is divided into a low load region Ae1, an intermediate load region Ae2, and a high load region Ae3. In the meantime, in this case, the first electric power level Pa and the second electric power level Pb may be stored in a memory (Not shown) in the power converter 200.

In the meantime, the first electric power level Pa and the second electric power level Pb may be variable with an operation condition, and the like. For an example, if a highest load used for a predetermined time period is below a predetermined value, the first electric power level Pa and the second electric power level Pb may be lowered.

FIGS. 14A to 14C are circuit diagrams illustrating operation of the power converter in FIG. 11, respectively.

FIG. 14A illustrates operation of only the first boost converter 410a in the low load region.

If the calculated load is lower than the first electric power level Pa, determining that the load is the low load, the first converter controller 415a or the second converter controller 415b may control to operate only the first boost converter 410a.

The MOSFET switching element S1 in the first boost converter 410a is turned on by the first converter switching control signal Scc1 from the first converter controller 415a. According to this, a current is accumulated at the first inductor for outputting energy accumulated in the first inductor to the capacitor C when the MOSFET switching element S1 is turned off.

Thus, by putting only the MOSFET switching element S1 having a low rated voltage into operation in the low load, the operation efficiency can be improved.

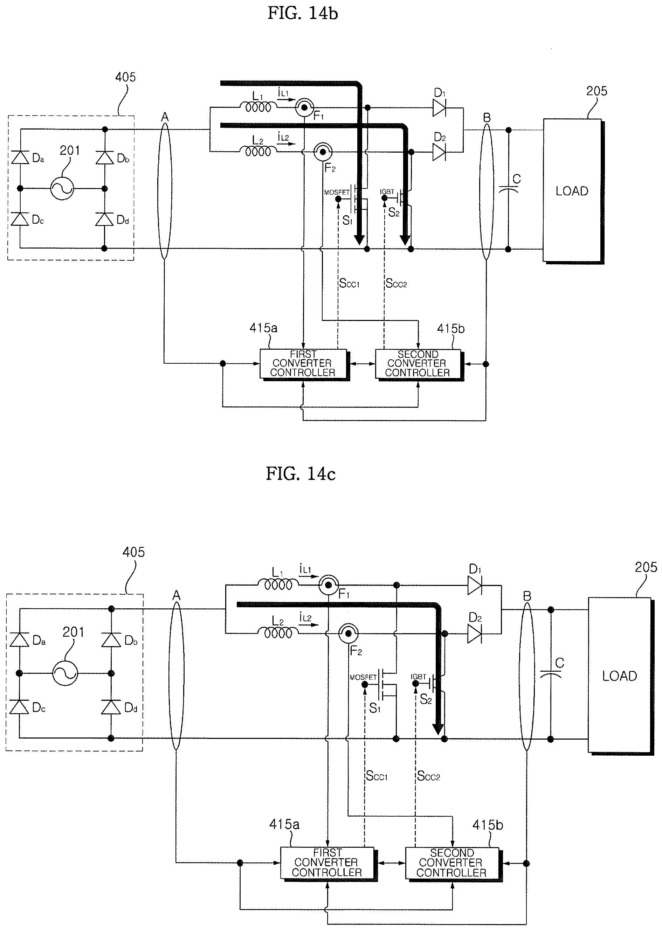

Next, FIG. 14B illustrates operation of the first boost converter 410a and the second boost converter 410b in the intermediate load region.

If the calculated load falls between the first electric power level Pa and the second electric power level Pb, the first converter controller 415a or the second converter controller 415b may determine that the load is the intermediate load, to control the first boost converter 410a and the second boost converter 410b to perform interleaved operation.

The MOSFET switching element S1 in the first boost converter 410a is turned on in response to the first converter switching control signal Scc1 from the first converter controller 415a. In this case, the IGBT switching element S2 in the second boost converter 410b may be turned off.

Next, when the MOSFET switching element S1 is turned off, the IGBT switching element S2 in the second boost converter 410b is turned on in response to the second converter switching control signal Scc2 from the second converter controller 415b.

Thus, by controlling the first boost converter 410a and the second boost converter 410b to perform interleaved operation in the intermediate load, the input current ripple and noise can be reduced.

FIG. 14C illustrates operation of only the second boost converter 410b in the high load region.

If the calculated load is higher than the second electric power level Pb, determining that the load is the high load, the first converter controller 415a or the second converter controller 415b may control to operate only the second boost converter 410b.

The IGBT switching element S2 in the second boost converter 410b is turned on by the second converter switching control signal Scc2 from the second converter controller 415b. According to this, a current is accumulated at the second inductor L2 for outputting energy accumulated in the second inductor to the capacitor C when the IGBT switching element S2 is turned off.

Thus, by putting the IGBT switching element S2 having a high rated voltage into operation in the high load, stable operation is possible in the high load, too.

Eventually, efficient operation of the power converter is made possible in a variety of loads by operating the power converter using different types of switching elements for respective loads. Particularly, efficient drive of the compressor and the like having a large load variation is made possible.

FIGS. 15A and 15B are reference circuit diagrams for describing operation of the first converter in FIG. 11.

FIGS. 15A and 15B illustrate the first boost converter 410a operated in a boost mode.

FIG. 15A illustrates a current Ia flowing to a closed loop constructed of the first inductor L1 and the first boost switching element S1 if the first boost switching element S1 in the first boost converter 410a is turned on. According to this, energy is accumulated at the first inductor L1 based on the current Ia. In this case, the first diode D1 is not conductive.

FIG. 15B illustrates the first diode D1 become conductive if the first boost switching element S1 in the first boost converter 410a is turned off to perform a current Ib to flow through the first inductor L1 and the first diode D1. In FIG. 15A, the current Ib may be a sum of the energy accumulated at the first inductor L1 and the current based on the input AC power source 201.

That is, the first boost switching element S1 in the first boost converter 410a is turned on/off, i.e., pulse width modulated.

Since operation of the second converter is identical to ones illustrated in FIGS. 15A and 15B, detailed description will be omitted.

Configurations and methods of the embodiments of the power converter and the air conditioner having the same in accordance with embodiments of the present invention described herein are applicable

As has been described, the power converter and the air conditioner having the same of the present invention have the following advantages.

According to an embodiment not covered by the present invention, the power converter and the air conditioner having the same includes the interleave converter in which the converter controller changes a number of operating converters in the interleave converter based on a load level of both terminals of the capacitor, permitting to enhance operation efficiency, not only at the low load region, but also at the high load region, and active variation of the output voltage of the interleave converter with variation of the load level of the both terminals of the capacitor which are output terminals of the interleave converter, to enhance operation efficiency throughout entire load region, enabling to drive a compressor or the like having a large variation of the load, efficiently.

Especially, the control to operate only the first converter in the interleave converter if the load level of the both terminals of the capacitor is lower the first level enables to enhance the operation efficiency by removing the switching loss caused by the second converter, and, moreover, lower the DC power further enabling to enlarge a width of the DC terminal voltage at the both terminals of the capacitor.

In the meantime, by controlling to operate the first converter and the second converter in the interleave converter if the load level of the both terminals of the capacitor is higher than the first level, stable operation can be made in the high load.

And, the interleaved operation of the first converter and the second converter enables to reduce the input current ripple and the noise.

Eventually, efficient operation of the power converter is made possible in a variety of loads by changing a number of operating converters with loads by using the interleave converter.

According to an embodiment according to the present invention, the power converter and the air conditioner having the same includes the interleave converter in which the first converter includes a first switching element of a first type and the second converter includes a second switching element of a second type having a rated voltage higher than the first type, thereby permitting to operate the switching elements matched to a variety of loads.

By operating the first switching element having a low rated voltage in the low load, the operation efficiency can be improved, and by operating the second switching element having a high rated voltage in the high load, stable operation is possible in the high load, too.

And, the interleaved operation of the first converter and the second converter in the intermediate load enables to reduce the input current ripple and the nose.

The method for operating the power converter and an air conditioner according to the foregoing embodiments may be implemented as code that can be written to a processor-readable recording medium included in the charging apparatus and can thus be read by a processor. The processor-readable recording medium may be any type of recording device in which data can be stored in a processor-readable manner.

## Claims

1. A power converter comprising:
a rectifying unit (405) configured to rectify an input AC current;
an interleave converter (410) having a plurality of converters and to convert rectified power to a DC power and to output the converted DC power, wherein the plurality of converters includes a first converter (410a) and a second converter (410b);
a capacitor (C) connected to an output terminal of the interleave converter;
a voltage detector (B) configured to detect a voltage at both terminals of the capacitor (C); and
a converter controller (415) configured to control the interleave converter,
wherein the first converter (410a) in the interleave converter (410) includes:
a first inductor (L1) connected to the rectifying unit (405);
a first diode (D1) connected to an output terminal of the interleave converter (410); and
a first switching element (S1) of a first type connected in parallel between the first inductor (L1) and the first diode (D1), and
wherein the second converter (410b) in the interleave converter (410) includes:
a second inductor (L2) connected to the rectifying unit (405);
a second diode (D2) connected to an output terminal of the interleave converter (410); and
a second switching element (S2) of a second type having a rated voltage higher than the first type and being connected in parallel between the second inductor (L2) and the second diode (D2), and
wherein the converter controller (415) is configured to calculate a load level of both terminals of the capacitor based on at least one of a current flowing to the first inductor (L1) in the first converter (410a) and a current flowing to the second inductor (L2) in the second converter (410b), and the detected voltage at the both terminals of the capacitor, and to control operation of the interleave converter (410) based on the calculated load level,
wherein the converter controller (415) is configured to operate only the first converter (410a) when the load level of the both terminals of the capacitor is lower than a first level, to operate only the second converter (410b) when the load level of the both terminals of the capacitor is higher than a second level which is higher than the first level, and to operate the first and second converter (410a, 410b) in an interleaved manner when the load level of the both terminals of the capacitor falls between the first level and the second level,
wherein the converter controller (415) includes a first converter controller (415a) for controlling the first converter (410a), and a second converter controller (415b) for controlling the second converter (410b),
wherein the first converter controller (415a) is configured to calculate the load level of both terminals of the capacitor,
wherein the first converter controller (415a) is configured to, when the calculated load level is lower than the first level, control a turn on timing or turn off timing of the first switching element in the first converter (410a) based on the calculated load level,
wherein the first converter controller (415a) is configured to, when the calculated load level is higher than a second level which is higher than the first level, output the calculated load level to the second converter controller (415b), and the second converter controller (415b) is configured to control a turn on timing or turn off timing of the second switching element in the second converter (410b) based on the calculated load level, and
wherein the first converter controller (415a) is configured to, when the calculated load level falls between the first level and the second level, control a turn on timing or turn off timing of the first switching element in the first converter (410a) based on the calculated load level, output the calculated load level to the second converter controller (415b), and the second converter controller (415b) is configured to control a turn on timing or turn off timing of the second switching element in the second converter (410b) based on the calculated load level.

2. The power converter of claim 1, further comprising:
an inverter (420) connected between the capacitor and a motor (250) and configured to convert an output power of the interleave converter (410) to an AC power and to output the AC power.

3. The power converter of claim 1, wherein the first switching element includes a metal oxide semiconductor field effect transistor, and the second switching element includes an insulated gate bipolar mode transistor.

4. An air conditioner comprising:
a compressor (152); and
the power converter (200) of any one of the preceding claims.

## Patentansprüche

1. Stromwandler, aufweisend:
eine Gleichrichtungseinheit (405), die zum Gleichrichten eines Eingangswechselstroms konfiguriert ist;
einen Mehrphasenwandler (410), der eine Vielzahl von Wandlern aufweist und zum Umwandeln von gleichgerichtetem Strom in einen Gleichstrom und zum Ausgeben des umgewandelten Gleichstroms dient, wobei die Vielzahl von Wandlern einen ersten Wandler (410a) und einen zweiten Wandler (410b) aufweisen;
einen Kondensator (C), der mit einem Ausgangsanschluss des Mehrphasenwandlers verbunden ist;
einen Spannungsdetektor (B), der zum Detektieren einer Spannung an beiden Anschlüssen des Kondensators (C) konfiguriert ist; und
eine Wandler-Steuerung (415), die zum Steuern des Mehrphasenwandlers konfiguriert ist,
wobei der erste Wandler (410a) in dem Mehrphasenwandler (410) aufweist:
eine erste Induktivität (L1), die mit der Gleichrichtungseinheit (405) verbunden ist;
eine erste Diode (D1), die mit einem Ausgangsanschluss des Mehrphasenwandlers (410) verbunden ist; und
ein erstes Schaltelement (S1) eines ersten Typs, das zwischen die erste Induktivität (L1) und die erste Diode (D1) parallelgeschaltet ist, und
wobei der zweite Wandler (410b) in dem Mehrphasenwandler (410) aufweist:
eine zweite Induktivität (L2), die mit der Gleichrichtungseinheit (405) verbunden ist;
eine zweite Diode (D2), die mit einem Ausgangsanschluss des Mehrphasenwandlers (410) verbunden ist; und
ein zweites Schaltelement (S2) eines zweiten Typs, das eine höhere Nennspannung als der erste Typ aufweist und zwischen die zweite Induktivität (L2) und die zweite Diode (D2) parallelgeschaltet ist, und
wobei die Wandler-Steuerung (415) konfiguriert ist, ein Lastniveau beider Anschlüsse des Kondensators auf Basis von einem zu der ersten Induktivität (L1) in dem ersten Wandler (410a) fließenden Strom und einem zu der zweiten Induktivität (L2) in dem zweiten Wandler (410b) fließenden Strom und/oder der detektierten Spannung an den beiden Anschlüssen des Kondensators zu berechnen, und den Betrieb des Mehrphasenwandlers (410) auf Basis des berechneten Lastniveaus zu steuern,
wobei die Wandler-Steuerung (415) konfiguriert ist, nur den ersten Wandler (410a) zu betreiben, wenn der Lastpegel der beiden Anschlüsse des Kondensators niedriger als ein erster Pegel ist, nur den zweiten Wandler (410b) zu betreiben, wenn der Lastpegel der beiden Anschlüsse des Kondensators höher als ein zweiter Pegel ist, welcher höher als der erste Pegel ist, und den ersten und den zweiten Wandler (410a, 410b) auf phasenversetzte Weise zu betreiben, wenn der Lastpegel der beiden Anschlüsse des Kondensators zwischen den ersten Pegel und den zweiten Pegel fällt,
wobei die Wandler-Steuerung (415) eine erste Wandler-Steuerung (415a) zum Steuern des ersten Wandlers (410a) und eine zweite Wandler-Steuerung (415b) zum Steuern des zweiten Wandlers (410b) aufweist,
wobei die erste Wandler-Steuerung (415a) konfiguriert ist, das Lastniveau beider Anschlüsse des Kondensators zu berechnen,
wobei die erste Wandler-Steuerung (415a) konfiguriert ist, einen Einschaltzeitpunkt oder Abschaltzeitpunkt des ersten Schaltelements in dem ersten Wandler (410a) auf Basis des berechneten Lastpegels zu steuern, wenn der berechnete Lastpegel niedriger als der erste Pegel ist,
wobei die erste Wandler-Steuerung (415a) konfiguriert ist, den berechneten Lastpegel an die zweite Wandler-Steuerung (415b) auszugeben, wenn der berechnete Lastpegel höher als ein zweiter Pegel ist, welcher höher als der erste Pegel ist, und die zweite Wandler-Steuerung (415b) konfiguriert ist, einen Einschaltzeitpunkt oder einen Abschaltzeitpunkt des zweiten Schaltelements in dem zweiten Wandler (410b) auf Basis des berechneten Lastniveaus zu steuern, und
wobei die erste Wandler-Steuerung (415a) konfiguriert ist, einen Einschaltzeitpunkt oder einen Abschaltzeitpunkt des ersten Schaltelements in dem ersten Wandler (410a) auf Basis des berechneten Lastniveaus zu steuern, wenn der berechnete Lastpegel zwischen den ersten Pegel und den zweiten Pegel fällt, den berechneten Lastpegel an die zweite Wandler-Steuerung (415b) auszugeben, und die zweite Wandler-Steuerung (415b) konfiguriert ist, einen Einschaltzeitpunkt oder Abschaltzeitpunkt des zweiten Schaltelements in dem zweiten Wandler (410b) auf Basis des berechneten Lastniveaus zu steuern.

2. Stromwandler nach Anspruch 1, ferner aufweisend:
einen Wechselrichter (420), der zwischen dem Kondensator und einem Motor (250) geschaltet ist und eingerichtet ist, einen Ausgangsstrom des Mehrphasenwandlers (410) in einen Wechselstrom zu wandeln und den Wechselstrom auszugeben.

3. Stromwandler nach Anspruch 1, wobei das erste Schaltelement einen Metall-Oxid-Halbleiter-Feldeffekttransistor aufweist und das zweite Schaltelement einen Bipolartransistor mit isolierter Gate-Elektrode aufweist.

4. Klimaanlage, aufweisend:
einen Kompressor (152); und
den Stromwandler (200) nach einem der vorhergehenden Ansprüche.

## Revendications

1. Convertisseur de puissance comprenant :
une unité de redressement (405) conçue pour redresser un courant alternatif d'entrée ;
un convertisseur d'entrelacement (410) ayant une pluralité de convertisseurs et servant à convertir une puissance redressée en une puissance de courant continu et à délivrer en sortie la puissance de courant continu convertie, dans lequel la pluralité de convertisseurs inclut un premier convertisseur (410a) et un second convertisseur (410b) ;
un condensateur (C) connecté à une borne de sortie du convertisseur d'entrelacement ;
un détecteur de tension (B) conçu pour détecter une tension au niveau des deux bornes du condensateur (C) ; et
un dispositif de commande de convertisseur (415) conçu pour commander le convertisseur d'entrelacement,
dans lequel le premier convertisseur (410a) dans le convertisseur d'entrelacement (410) inclut :
un premier inducteur (L1) connecté à l'unité de redressement (405) ;
une première diode (D1) connectée à une borne de sortie du convertisseur d'entrelacement (410) ; et
un premier élément de commutation (S1) d'un premier type connecté en parallèle entre le premier inducteur (L1) et la première diode (D1), et
dans lequel le second convertisseur (410b) dans le convertisseur d'entrelacement (410) inclut :
un second inducteur (L2) connecté à l'unité de redressement (405) ;
une seconde diode (D2) connectée à une borne de sortie du convertisseur d'entrelacement (410) ; et
un second élément de commutation (S2) d'un second type ayant une tension nominale supérieure au premier type et étant connecté en parallèle entre le second inducteur (L2) et la seconde diode (D2), et
dans lequel le dispositif de commande de convertisseur (415) est conçu pour calculer un niveau de charge des deux bornes du condensateur sur la base d'au moins l'un d'un courant circulant vers le premier inducteur (L1) dans le premier convertisseur (410a) et d'un courant circulant vers le second inducteur (L2) dans le second convertisseur (410b), et la tension détectée au niveau des deux bornes du condensateur, et pour commander un fonctionnement du convertisseur d'entrelacement (410) sur la base du niveau de charge calculé,
dans lequel le dispositif de commande de convertisseur (415) est conçu pour faire fonctionner seulement le premier convertisseur (410a) lorsque le niveau de charge des deux bornes du condensateur est inférieur à un premier niveau, pour faire fonctionner seulement le second convertisseur (410b) lorsque le niveau de charge des deux bornes du condensateur est supérieur à un second niveau qui est supérieur au premier niveau, et pour faire fonctionner le premier et second convertisseur (410a, 410b) d'une manière entrelacée lorsque le niveau de charge des deux bornes du condensateur descend entre le premier niveau et le second niveau,
dans lequel le dispositif de commande de convertisseur (415) inclut un premier dispositif de commande de convertisseur (415a) destiné à commander le premier convertisseur (410a), et un second dispositif de commande de convertisseur (415b) destiné à commander le second convertisseur (410b),
dans lequel le premier dispositif de commande de convertisseur (415a) est conçu pour calculer le niveau de charge des deux bornes du condensateur,
dans lequel le premier dispositif de commande de convertisseur (415a) est conçu pour commander, lorsque le niveau de charge calculé est inférieur au premier niveau, un moment d'activation ou un moment de désactivation du premier élément de commutation dans le premier convertisseur (410a) sur la base du niveau de charge calculé,
dans lequel le premier dispositif de commande de convertisseur (415a) est conçu pour délivrer en sortie, lorsque le niveau de charge calculé est supérieur à un second niveau qui est supérieur au premier niveau, le niveau de charge calculé au second dispositif de commande de convertisseur (415b), et le second dispositif de commande de convertisseur (415b) est conçu pour commander un moment d'activation ou un moment de désactivation du second élément de commutation dans le second convertisseur (410b) sur la base du niveau de charge calculé, et
dans lequel le premier dispositif de commande de convertisseur (415a) est conçu pour commander, lorsque le niveau de charge calculé tombe entre le premier niveau et le second niveau, un moment d'activation ou un moment de désactivation du premier élément de commutation dans le premier convertisseur (410a) sur la base du niveau de charge calculé, délivrer en sortie le niveau de charge calculé au second dispositif de commande de convertisseur (415b), et le second dispositif de commande de convertisseur (415b) est conçu pour commander un moment d'activation ou un moment de désactivation du second élément de commutation dans le second convertisseur (410b) sur la base du niveau de charge calculé.

2. Convertisseur de puissance selon la revendication 1, comprenant en outre :
un onduleur (420) connecté entre le condensateur et un moteur (250) et conçu pour convertir une puissance de sortie du convertisseur d'entrelacement (410) en une puissance de courant alternatif et pour délivrer en sortie la puissance de courant alternatif.

3. Convertisseur de puissance selon la revendication 1, dans lequel le premier élément de commutation inclut un transistor à effet de champ à semi-conducteur à oxyde métallique, et le second élément de commutation inclut un transistor à mode bipolaire à grille isolée.

4. Climatiseur comprenant :
un compresseur (152) ; et
le convertisseur de puissance (200) selon l'une quelconque des revendications précédentes.
